(19) Europäisches Patentamt / European Patent Office / Office européen des brevets

(11) **EP 2 647 830 A1**

(12) **DEMANDE DE BREVET EUROPEEN**

(43) Date de publication:
**09.10.2013 Bulletin 2013/41**

(51) Int Cl.:
*F02N 11/08* (2006.01)   *H02P 1/18* (2006.01)

(21) Numéro de dépôt: **13161439.8**

(22) Date de dépôt: **27.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.04.2012 FR 1253176**

(71) Demandeur: **VALEO EQUIPEMENTS ELECTRIQUES MOTEUR**
**94046 Créteil (FR)**

(72) Inventeurs:
• **Thimon, Alain**
**93230 ROMAINVILLE (FR)**
• **Metral, Jean Sébastien**
**38290 LA VERPILLIERE (FR)**
• **Labbe, Nicolas**
**69003 LYON (FR)**
• **Baudesson, Philippe**
**27220 LA BOISSIERE (FR)**
• **Gauger, Solenne**
**94100 SAINT MAUR DES FOSSES (FR)**

(54) **Dispositif de commande d'un démarreur d'un moteur thermique de véhicule automobile, et démarreur correspondant**

(57)   Le dispositif de commande d'un démarreur d'un moteur thermique de véhicule automobile selon l'invention est du type de ceux comprenant des moyens de contrôle d'une intensité (I) d'un courant d'alimentation d'un moteur électrique (3) à courant continu du démarreur et des moyens d'interface (5) destinés à recevoir au moins un ordre de démarrage (START). Conformément à l'invention, le dispositif de commande comprend en outre: des moyens de mesure périodique (7, 8, 9, 12) de variables de fonctionnement; des moyens de mémorisation d'au moins une loi d'évolution optimale de l'intensité dans des conditions de démarrage difficile; des moyens de détermination (6) d'une valeur de consigne de l'intensité en fonction des variables de fonctionnement et de la loi d'évolution optimale; et les moyens de contrôle sont constitués par un hacheur série piloté par les moyens de détermination.

**FIG. 1**

EP 2 647 830 A1

## Description

### DOMAINE TECHNIQUE DE L'INVENTION.

De manière générale, l'invention concerne le domaine des démarreurs électriques de moteurs thermiques dans les véhicules automobiles. Plus particulièrement, l'invention concerne un dispositif de commande d'un démarreur. Elle concerne aussi un démarreur comprenant un tel dispositif de commande.

### ARRIERE PLAN TECHNOLOGIQUE DE L'INVENTION.

Lors de la mise sous tension d'un démarreur pour assurer le démarrage du moteur thermique du véhicule, il se produit un courant d'appel important qui est proche du niveau de courant de court-circuit du démarreur, à savoir, un courant de l'ordre de 1000 Ampères. Ce courant décroît ensuite en intensité à mesure que l'induit du démarreur, correspondant au rotor de la machine, monte en vitesse.

Une telle intensité initiale impose des contraintes de conception importantes sur le circuit électrique de puissance alimentant le démarreur, notamment sur le contacteur électromagnétique et le moteur électrique du démarreur.

Afin de contrôler et limiter le pic de courant en régime transitoire, il est connu d'insérer divers éléments passifs dans le circuit de puissance tels qu'une résistance de démarrage ou un élément inductif.

Ces solutions donnent en général satisfaction dans des circonstances normales d'utilisation d'un démarreur conventionnel alimentés par une batterie de 12 V, c'est-à-dire quand le démarreur est lancé pour une durée brève au moment où le conducteur du véhicule actionne la clé de contact.

Il en est différemment en cas de démarrage difficile, notamment quand le moteur thermique est très froid, que l'alimentation en carburant est déficiente ou qu'il existe une avarie quelconque sur le véhicule.

Dans ces circonstances, il arrive que l'utilisateur fasse de multiples tentatives de démarrage successives dans l'espoir de faire démarrer le moteur thermique.

Des paramètres "pire cas", qui ont été déterminés à partir des contraintes de démarrage à froid, peuvent être dépassés, et un effet cumulatif d'échauffement peut conduire à la destruction du démarreur.

Des solutions visant à protéger un démarreur conventionnel en cas de démarrages difficiles sont connues de l'état de la technique. Par exemple, le dispositif pour la commande d'un démarreur de véhicule automobile divulgué dans la demande de brevet FR2770349 temporise les ordres de démarrage, et bloque la commande de l'alimentation du moteur électrique en fonction d'un ou de plusieurs paramètres de fonctionnement du démarreur et/ ou du moteur thermique.

Le développement des véhicules hybrides fait apparaître de nouvelles contraintes sur les démarreurs. En effet, ces véhicules, bien qu'utilisant deux sources de propulsion, l'une thermique et l'autre électrique, nécessitent un équipement supplémentaire pour assurer le démarrage ou le redémarrage du moteur thermique dans certains cas tels que le premier démarrage à froid et le redémarrage du moteur thermique lorsque le véhicule est en mode tout électrique (mode dit "ZEV" en terminologie anglaise) pour éviter les à-coups de couple et une chute de la vitesse que provoquerait alors le démarrage du moteur thermique par le moteur électrique.

Aujourd'hui cette fonction est généralement assurée par un démarreur 12 V ou un alterno-démarreur 12 V.

Les problèmes présentés par ces types d'architectures et de solutions sont de deux ordres :

- la batterie 12 V doit être dimensionnée pour permettre les démarrages par temps froid, ce qui amène à la surdimensionner. Il y a donc deux batteries aux cahiers des charges très contraignants, l'une pour les équipements haute tension comme le moteur électrique de traction et le compresseur de climatisation, et l'autre pour le réseau basse tension et l'alimentation du démarreur. On notera que les termes « haute tension » se réfèrent ici à des tensions supérieures à 14 V.

- sur un véhicule hybride permettant des roulages en tout électrique, il peut être nécessaire de faire redémarrer le moteur thermique pour répondre à une demande de forte accélération. Les performances de démarrage alors demandées se trouvent très largement supérieures, en termes de couple et de puissance, à ce que permettent les démarreurs 12 V de types restant compatibles avec l'espace disponible sous le capot moteur. De plus, le moteur électrique de traction étant en utilisation, il ne peut être utilisé pour démarrer le moteur thermique sans générer des à-coups de couple et d'accélération au moment de l'accouplement au moteur thermique qui est alors à l'arrêt.

### DESCRIPTION GENERALE DE L'INVENTION.

La présente invention vise donc un dispositif de commande d'un démarreur de moteur thermique de véhicule automobile permettant de pallier les inconvénients des solutions connues de l'état qui ont été rappelés ci-dessus, et d'optimiser le fonctionnement d'un démarreur, notamment d'un démarreur de véhicule hybride.

Le dispositif de commande d'un démarreur d'un moteur thermique de véhicule automobile selon l'invention est du type de ceux comprenant des moyens de contrôle d'une intensité d'un courant d'alimentation d'un moteur électrique à courant continu du démarreur et des moyens d'interface destinés à recevoir au moins un ordre de démarrage.

Conformément à l'invention, le dispositif de commande selon l'invention comprend en outre:

- des moyens de mesure périodique de variables de fonctionnement du moteur électrique et/ ou du moteur thermique et/ou du dispositif;
- des moyens de mémorisation d'au moins une loi d'évolution optimale de l'intensité dans des conditions de démarrage difficile;
- des moyens de détermination d'une valeur de consigne de l'intensité en fonction des variables de fonctionnement et de la au moins une loi d'évolution optimale ; et

les moyens de contrôle sont constitués par un hacheur série piloté par les moyens de détermination.

Selon une caractéristique particulière, les moyens de mesure périodique comprennent un premier capteur de l'intensité et un second capteur d'une tension d'alimentation du moteur électrique et les moyens de mémorisation contiennent en outre des données représentatives d'une résistance interne et d'une self du moteur électrique, ainsi que de préférence d'une constante de force électromotrice du moteur électrique.

Selon une autre caractéristique particulière, le dispositif selon l'invention comprend une ou plusieurs mesures de premiers paramètres de fonctionnement choisis parmi un premier groupe:

- une première température du démarreur;
- une seconde température des composants électroniques de puissance associés au démarreur;
- une force électromotrice du moteur électrique;
- un temps de fonctionnement à partir de l'ordre de démarrage;
- une vitesse de rotation du moteur thermique;
- une tension d'alimentation du moteur électrique; et
- l'intensité.

Selon encore une autre caractéristique particulière, le dispositif selon l'invention comprend en outre une ou plusieurs évaluations de seconds paramètres de fonctionnement choisis parmi un second groupe:

- une première variation de la première température;
- une seconde variation de la seconde température; et
- une dérivée temporelle de l'intensité.

Selon encore une autre caractéristique particulière, le dispositif selon l'invention comprend en outre une estimation de la force électromotrice en fonction de la tension d'alimentation du moteur électrique, de l'intensité, de la dérivée temporelle, d'une résistance interne et d'une self du moteur électrique.

Selon encore une autre caractéristique particulière, la loi d'évolution optimale est un asservissement de l'intensité au moins en fonction du temps de fonctionnement et/ou en fonction de la de vitesse de rotation du moteur thermique mesurée ou bien estimée à partir de la force électromotrice.

Selon encore une autre caractéristique particulière, le dispositif de commande selon l'invention comprend en outre une vérification d'une loi d'évolution antérieure de l'intensité.

L'invention concerne aussi un démarreur d'un moteur thermique de véhicule automobile comportant un dispositif de commande tel que décrit brièvement ci-dessus.

Ces quelques spécifications essentielles auront rendu évidentes pour l'homme de métier les perspectives offertes par l'invention concernant:

- une utilisation de la batterie haute tension pour le démarrage sans contrainte supplémentaire nécessitant un surdimensionnement de cette batterie haute tension;
- une diminution des contraintes sur la batterie 12 V;
- une réduction des contraintes sur le réseau basse tension;
- une limitation du courant d'alimentation du démarreur et une diminution des pertes thermiques;
- une fourniture par le démarreur d'un couple d'entraînement important au début du démarrage tout en limitant les phénomènes d'arcs au niveau des balais à mesure que la vitesse de rotation augmente ;
- de manière générale, un accroissement des performances du démarreur;
- des avantages concurrentiels liés à l'optimisation de toute la chaîne de démarrage (démarreur, boîtier régulateur de courant, batterie, faisceau).

Les spécifications détaillées de l'invention sont données dans la description qui suit en liaison avec le dessin ci-annexé. Il est à noter que ce dessin n'a d'autre but que d'illustrer le texte de la description et ne constitue en aucune sorte une limitation de la portée de l'invention.

**BREVE DESCRIPTION DES DESSINS.**

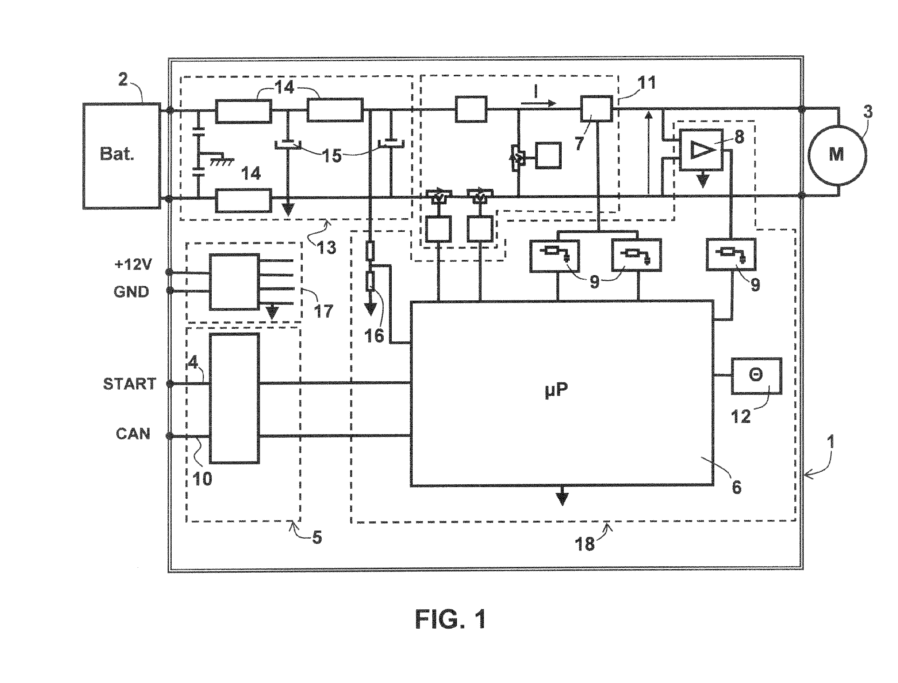

La **Figure 1** est un schéma de principe d'un mode de réalisation particulier d'un dispositif de commande d'un démarreur d'un moteur thermique de véhicule automobile selon l'invention.

**DESCRIPTION DES MODES DE REALISATION PREFERES DE L'INVENTION.**

En référence à la **Figure 1,** un mode de réalisation particulier du dispositif de commande d'un démarreur d'un moteur thermique de véhicule automobile selon l'invention 1 se présente sous la forme d'un boîtier électronique 1 intercalé entre la batterie 2 et le moteur électrique à courant continu 3 du démarreur.

Le boîtier électronique 1 comporte une entrée de validation du démarrage 4 qui transmet l'ordre de démarrage START au reste du dispositif 1 par l'intermédiaire d'un circuit d'isolation et d'interface 5.

Un microcontrôleur 6 acquiert périodiquement des valeurs de l'intensité I et de la tension V d'alimentation au moyen, respectivement, de premier 7 et second 8 capteurs.

Les mesures sont filtrées par des filtres 9 avant numérisation par le microcontrôleur 6.

Les valeurs numérisées de l'intensité I et de la tension V sont traitées par le microprocesseur 6 et permettent d'obtenir une estimation de la force électromotrice du moteur électrique 3 par la relation:

$$f.e.m = V - R*I - L*dI/dt$$

où R et L sont respectivement une résistance interne et une self des enroulements du moteur électrique 3.

Quand cette estimation correspond à des conditions de démarrage difficile, le microcontrôleur 6 avertit l'unité de contrôle du moteur thermique (émission d'un drapeau d'erreur sur le bus de terrain 10) et contrôle l'intensité d'alimentation I en pilotant les commutateurs à semiconducteur d'un hacheur série 11.

La détection des conditions de démarrage difficile est alternativement ou simultanément réalisée par la mesure périodique de la vitesse de rotation du moteur thermique.

Selon l'architecture du véhicule, cette information est obtenue à partir d'une mesure de vitesse transmise par le bus de terrain 10, ou bien estimée à partir de la force électromotrice du moteur électrique 3 et de sa constante de force électromotrice.

La surveillance de l'échauffement du moteur électrique 3 ou du dissipateur thermique du boîtier électronique 1 par un senseur de température 12 permet également de détecter des conditions de démarrage difficile.

Une vérification périodique du profil de courant en cours d'utilisation, c'est-à-dire correspondant à une loi d'évolution de l'intensité I déterminée antérieurement, est pareillement avantageusement mise en oeuvre pour la détection des circonstances de démarrage difficile,

Le boîtier électronique 1 comprend aussi des moyens de filtrage 13 d'une tension de batterie 2 constitués par des éléments inductifs 14 et des capacités 15.

La tension de batterie est échantillonnée par le microcontrôleur 6 par l'intermédiaire d'un pont diviseur 16.

Le boîtier électronique 1 dispose d'une alimentation auxiliaire 17 interne fournissant les différents niveaux de tension nécessaires à son fonctionnent à partir de la tension de batterie 2.

Dans les conditions de démarrage difficile, le microcontrôleur 6 avec ses moyens de mesure périodique 7, 8, 9, 12, constituant un ensemble de régulation 18, asservit l'intensité I du courant d'alimentation en fonction de lois d'évolution optimales stockées dans sa mémoire et des mesures des paramètres de fonctionnement du moteur électrique 3, du moteur thermique et du boîtier 1.

Par exemple, le microcontrôleur 6 génère un pic de courant (pic de couple d'entraînement pour forcer le démarrage) dont le niveau et la durée sont calculés en fonction de la température du boîtier 1 et/ou du moteur électrique 3.

Dans un autre cas, le microcontrôleur 6 passe dans un mode de génération de trains d'impulsions de courant pour limiter les échauffements et préserver la batterie 2 selon son état de charge.

Comme il va de soi, l'invention ne se limite pas aux seuls modes d'exécution préférentiels décrits ci-dessus.

L'invention embrasse toutes les variantes possibles de réalisation dans la limite de l'objet des revendications ci-après.

**Revendications**

1. Dispositif de commande (1) d'un démarreur d'un moteur thermique de véhicule automobile, du type de ceux comprenant des moyens de contrôle (11) d'une intensité (I) d'un courant d'alimentation d'un moteur électrique (3) à courant continu dudit démarreur et des moyens d'interface (5) destinés à recevoir au moins un ordre de démarrage (START), **caractérisé en ce qu'il** comprend en outre:

   - des moyens de mesure périodique (7, 8, 9, 12) de variables de fonctionnement dudit moteur électrique (3) et/ ou dudit moteur thermique et/ou dudit dispositif (1);
   - des moyens de mémorisation (6) d'au moins une loi d'évolution optimale de ladite intensité (I) dans des conditions de démarrage difficile;
   - des moyens de détermination (6) d'une valeur de consigne de ladite intensité (I) en fonction desdites variables de fonctionnement et de ladite au moins une loi d'évolution optimale ;

   et **en ce que** lesdits moyens de contrôle (11) sont constitués par un hacheur série (11) piloté par lesdits moyens de détermination (6).

2. Dispositif de commande d'un démarreur d'un moteur thermique de véhicule automobile selon la revendication 1, **caractérisé en ce que** lesdits moyens de mesure périodique comprennent un premier capteur (7) de ladite intensité (I) et un second capteur (8) d'une tension d'alimentation (V) dudit moteur électrique (3) et **en ce que** lesdits moyens de mémorisation (6) contiennent en outre des données représentatives d'une résistance interne et d'une self dudit moteur électrique (3), ainsi que de préférence d'une constante de force électromotrice dudit moteur électrique (3).

**3.** Dispositif de commande d'un démarreur d'un moteur thermique de véhicule automobile selon la revendication 1 ou 2, **caractérisé en ce qu'il** comprend une ou plusieurs mesures de premiers paramètres de fonctionnement choisis parmi un premier groupe:

- une première température dudit démarreur;
- une seconde température (Θ) des composants électroniques de puissance associés audit démarreur;
- une force électromotrice dudit moteur électrique (3);
- un temps de fonctionnement à partir dudit ordre de démarrage;
- une vitesse de rotation dudit moteur thermique;
- une tension d'alimentation (V) dudit moteur électrique (3);
- ladite intensité (I).

**4.** Dispositif de commande d'un démarreur d'un moteur thermique de véhicule automobile selon la revendication 3, **caractérisé en ce qu'il** comprend en outre une ou plusieurs évaluations de seconds paramètres de fonctionnement choisis parmi un second groupe:

- une première variation de ladite première température;
- une seconde variation de ladite seconde température (Θ);
- une dérivée temporelle de ladite intensité (I).

**5.** Dispositif de commande d'un démarreur d'un moteur thermique de véhicule automobile selon la revendication 4, **caractérisé en ce qu'il** comprend en outre une estimation de ladite force électromotrice en fonction de ladite tension d'alimentation (V) dudit moteur électrique, de ladite intensité (I), de ladite dérivée temporelle, d'une résistance interne et d'une self dudit moteur électrique (3).

**6.** Dispositif de commande d'un démarreur d'un moteur thermique de véhicule automobile selon l'une quelconque des revendications 3 à 5, **caractérisé en ce que** ladite loi d'évolution optimale est un asservissement de ladite intensité (I) au moins en fonction dudit temps de fonctionnement et/ou en fonction de ladite de vitesse de rotation dudit moteur thermique mesurée ou bien estimée à partir de ladite force électromotrice.

**7.** Dispositif de commande d'un démarreur d'un moteur thermique de véhicule automobile selon la revendication 6, **caractérisé en ce qu'il** comprend en outre une vérification d'une loi d'évolution antérieure de ladite intensité (1).

**8.** Démarreur d'un moteur thermique de véhicule automobile, **caractérisé en ce qu'il** comporte un dispositif de commande (1) selon l'une quelconque des revendications 1 à 7 précédentes.

**FIG. 1**

EP 2 647 830 A1

Europäisches
Patentamt

European
Patent Office

Office européen
des brevets

**RAPPORT DE RECHERCHE EUROPEENNE**

Numéro de la demande

EP 13 16 1439

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 148 084 A2 (BOSCH GMBH ROBERT [DE]) 27 janvier 2010 (2010-01-27) * le document en entier * ----- | 1,8 | INV. F02N11/08 H02P1/18 |
| X | EP 1 883 154 A1 (RENAULT SAS [FR]) 30 janvier 2008 (2008-01-30) * alinéas [0022] - [0023], [0029], [0030], [0033], [0034]; figure 1 * * alinéas [0037] - [0045] - alinéas [0049] - [0052] * ----- | 1-8 | |
| X | US 2004/168664 A1 (SENDA TAKASHI [JP] ET AL) 2 septembre 2004 (2004-09-02) * alinéas [0061] - [0067], [0087] - [0089], [0115]; figures 1.2,14,15 * ----- | 1,3,6,8 | |
| X | DE 10 2009 047163 A1 (BOSCH GMBH ROBERT [DE]) 1 juin 2011 (2011-06-01) * alinéas [0011], [0013], [0016] - alinéas [0049] - [0056]; figures 1,5 * * alinéas [0063], [0072] - [0075] * ----- | 1,3,6,8 | |
| A | JP 2009 127438 A (IHI CORP) 11 juin 2009 (2009-06-11) * abrégé; figure 1 * ----- | 1 | DOMAINES TECHNIQUES RECHERCHES (IPC) F02N H02P |
| A | DE 10 2007 057630 A1 (VOLKSWAGEN AG [DE]) 4 juin 2009 (2009-06-04) * alinéas [0004], [0011] - [0014] * ----- | 1 | |

Le présent rapport a été établi pour toutes les revendications

| Lieu de la recherche | Date d'achèvement de la recherche | Examinateur |
|---|---|---|
| Munich | 31 mai 2013 | Ossanna, Luca |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 16 1439

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-05-2013

| Document brevet cité au rapport de recherche | | Date de publication | Membre(s) de la famille de brevet(s) | Date de publication |
|---|---|---|---|---|
| EP 2148084 | A2 | 27-01-2010 | DE 102008040681 A1<br>EP      2148084 A2 | 28-01-2010<br>27-01-2010 |
| EP 1883154 | A1 | 30-01-2008 | EP      1883154 A1<br>FR      2904160 A1 | 30-01-2008<br>25-01-2008 |
| US 2004168664 | A1 | 02-09-2004 | DE 102004007393 A1<br>FR      2851793 A1<br>US    2004168664 A1<br>US    2005253393 A1 | 09-09-2004<br>03-09-2004<br>02-09-2004<br>17-11-2005 |
| DE 102009047163 | A1 | 01-06-2011 | DE 102009047163 A1<br>WO    2011064013 A2 | 01-06-2011<br>03-06-2011 |
| JP 2009127438 | A | 11-06-2009 | AUCUN | |
| DE 102007057630 | A1 | 04-06-2009 | DE 102007057630 A1<br>WO    2009068212 A1 | 04-06-2009<br>04-06-2009 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2770349